# EUROPEAN PATENT SPECIFICATION

(11) **EP 3 706 582 B1**
(45) Date of publication and mention of the grant of the patent: **26.01.2022**
(21) Application number: 18800564.9
(22) Date of filing: 05.11.2018
(51) Int. Cl.: A23J 1/00, A23J 1/04, B63H 21/38

(54) **FISHING SHIP WITH A SILAGE FACILITY AND ASSOCIATED METHOD**
FISCHEREISCHIFF MIT SILAGEANLAGE UND ZUGEHÖRIGES VERFAHREN
NAVIRE DE PÊCHE DOTÉ D'UNE INSTALLATION D'ENSILAGE ET PROCÉDÉ ASSOCIÉ

(30) Priority: 06.11.2017 NO 20171755
(43) Date of publication of application: 16.09.2020
(73) Proprietor: PG Flow Solutions AS, 1378 Nesbru (NO)
(72) Inventor: HAUGAN, Erland, 8416 Sortland (NO); EIDE, Anders, 3152 Tolvsrød (NO)
(74) Representative: Protector IP AS
(86) International application number: PCT/EP2018/080136
(87) International publication number: WO 2019/086657

(56) References cited:
- EP-B1- 2 667 734
- WO-A1-87/04051
- WO-A1-2005/115176
- WO-A1-2010/019053
- CA-A- 854 133

## Description

### TECHNICAL FIELD

The present invention relates to fishing ship, such as a trawler, with a silage facility that is configured to produce a fish protein concentrate (FPC) silage product from marine feed. Such marine feed can typically be fish by-products originating from fish processing equipment, e.g. a fileting machine or gutting machine, or other marine species, either as by-products of a processing step or non-processed.

### Background Art

The awareness of the need to exploit a larger portion of the resources in the sea has been increasing in the last years. For example, while fish filets are mostly used for human consumption, by-products, namely the fish entrails, such as heads, livers, and skin, represent a significant value. For some fishing vessels that are equipped with fish processing equipment, such as fileting machines or heading and gutting machines, it happens that they simply, due to economical or space reasons, discharge the fish entrails back into the sea, while storing only the parts that are suitable for human consumption.

While it is known to use such fish entrails as ingredients in animal food, such as used in the fish farming industry, it is not always practical or economically viable for the fishing vessels to transport the fish entrails to a receiving onshore facility. In some cases, the vessels may be too far away from the receiving facilities, so that the quality of the fish entrails will degrade before offloading. In other cases, storage of the fish entrails may occupy too much of the vessel's storage capacity, which can then not be used to store the more valuable filets. To solve this, it has been suggested to turn the fish entrails into a silage product while still on the vessel. By milling the fish entrails and adding a suitable amount of acid, a silage product is obtained that can be stored for longer periods in tanks onboard the vessel.

The report *"Pilotanlegg- fullskala ensilasjeproduksjon",* T. Grimstad (Nordnes AS), discuss a test project, where a silage facility was arranged onboard the trawler *MS Nordstar.* The facility included a mill to desintegrate the fish entrails components, a silage tank and an acid dosage system. The report mentions the production of fish meal (and fish oil), silage, hydrolysis process, and freezing, to be considered as potential methods. A challenge mentioned in the report, is the construction of a ship that is optimized with respect to capacity to store human consumption products and silage products.

Patent application publication NO20110129 discloses a raft having cylindrical pontoons. The raft is equipped with silage equipment for handling of fish.

Patent publication NO328445 B1 discloses a corresponding raft.

Furthermore, the article *"*Fish silage hydrolysates: Not only a feed nutrient, but also a useful feed additive", Olsen et al. from June 2017 discusses hydrolysates of fish, and mentions evaporation of the protein hydrolysate for the production of a dry feed. EP 2 667 734 B1 discloses floats for ensilation. WO 87/04051 A1 discloses a method for the manufacture of fish silage pellets. WO 2005/115176 A1 discloses hydrolysed marine protein products. CA 854133 A discloses a method for processing fresh meat and fish.

An object of the present invention may be to provide a fishing ship with a silage facility which is optimized with respect to production and/or storage capacity of fish by-products.

Another object of the present invention may be to provide a fishing ship with a ship integrated silage facility with an overall reduced energy consumption compared to a land-based facility.

Marine feed used for silage production, such as fish entrails or other marine protein-containing mass, should be as fresh as possible. Yet another object of the present invention may thus be to provide a fishing ship with a ship integrated silage facility that is configured to receive fish entrails or other marine feed as soon as it is available. Preferably, the operator should not need to store the marine feed in an intermediate tank before starting the silage process.

A further object may be to provide a fishing ship with a ship integrated silage facility that is configured to produce and store a fish protein concentrate (FPC) silage by occupying as less as possible of the ship's space.

Another object of the invention may be to provide a ship integrated silage facility that avoids coagulation of fish proteins and/or setting or burning of fish bone materials.

Another object of the invention may be to provide a ship integrated silage facility that is configured to produce a fish protein concentrate silage product in a relatively short time while being configured to receive fresh marine feed during an ongoing autolysis process.

Another object of the invention may be to provide a ship integrated silage facility, which is adapted for being automated, and which in particular is adapted for automation of gas freeing and cleaning of the tanks of the silage facility.

### Summary of invention

The present invention is defined by the appended claims.

According to a first aspect of the present invention, there is provided a fishing ship comprising fishing equipment, fish processing equipment, and a fish storage arrangement for storage of processed fish, at least one main engine for propulsion of the fishing ship, and a silage facility configured to receive marine feed and to process it into a fish protein concentrate (FPC) silage product. According to the invention, the silage facility comprises a marine feed inlet line, a silage tank connected to the marine feed inlet line and comprising a silage tank agitator and a heating arrangement (20). The silage tank is configured to produce an autolyzed silage of the marine feed. The silage facility further comprises an acid supply arrangement that is configured to supply an acid to the marine feed in the silage tank. Furthermore, the silage facility has a decanter that is configured to receive the silage and to separate it into oil and a separated silage, wherein the decanter comprises an oil outlet and a separated silage outlet. The silage facility also comprises an evaporation tank comprising an agitator and a heating arrangement. The evaporation tank is configured to receive the separated silage, and to remove water from the received separated silage, as it is connected to a vacuum unit, such as a pump. The evaporation tank is, by removal of water, configured to produce a fish protein concentrate silage product that comprises less water than the separated silage. Furthermore, the fishing ship comprises a storage tank configured to receive the FPC silage product.

The silage facility can advantageously further comprise a heating tank that is configured to receive the autolyzed silage and to produce a heated silage of the autolyzed silage. The heating tank can be arranged upstream of the decanter and downstream of the silage tank.

In embodiments where the silage facility is without a separate heating tank, a heating step may be performed in the silage tank itself.

An advantage of embodiments including the heating tank, is that autolyzed silage may be transported out of the silage tank when the autolysis process has been performed, so that the silage tank is made available for new marine feed.

In some embodiments, a mill may be installed upstream of the silage tank, to mill the marine feed into smaller parts.

Advantageously, the silage facility can further comprise an oil tank that is configured to store oil that is separated in the decanter.

With a fishing ship is herein meant a seagoing ship that is configured for capturing /harvesting marine feed such as fish, or other marine species, e.g. shellfish or the like.

With fishing equipment is herein meant equipment permanently installed on the fishing ship, which is configured for capture or harvest of the marine feed. Typically, such fishing equipment may be trawling equipment, seine handling equipment, or the like.

With fish processing equipment is herein meant equipment installed on the ship, which is configured to process captured fish or other marine life, such as fileting machines or gutting machines.

With a fish storage arrangement is herein meant a volume inside the fishing ship, configured for storage of processed fish. Typically, such a storage arrangement may be a freezing compartment that is configured for storage of frozen fish filets.

With the term fish protein concentrate (FPC) silage product is herein meant a concentrated silage product that is produced from marine feed, however not restricted to marine feed in the form of fish. That is, the marine feed used to produce the FPC silage product may also, in addition to or instead of fish, include other marine species, such as crustaceans (e.g. copepods).

In some embodiments, the heating arrangement of the heating tank and/or of the evaporation tank are arranged only on the external side of the heating tank and/or the evaporation tank, respectively.

This means that the heating arrangement does not comprise a component that is arranged in the same space as the marine feed / silage product. Thus, the silage product is heated only by the heated wall of the tank itself. This feature is advantageous for avoidance of burning of the silage mass, and with respect to cleaning of the inner walls of the tanks, since the walls are not covered with obstructing heating means.

This is particularly advantageous when compared to inline heaters, where the mass contacts warm surfaces that need to be excessively warm to pass a sufficient amount of thermal energy onto the mass. By heating the mass when located inside at tank, the entire batch of silage is heated simultaneously, and one can avoid concentrated surfaces with excessive temperatures.

Furthermore, by using this type of batch-wise heating, the equipment is less prone to malfunctioning. This means less maintenance and unintended stops of the operation. An unintended halt of operation would be severe since that would also halt the fishing when out on the sea.

It is disclosed that the main engine comprises an engine cooling system comprising a cooling liquid circulation system, wherein the heating arrangement of one or more of the silage tank, the heating tank, and the evaporation tank is configured to transfer thermal energy from the cooling liquid circulation system to the interior of the respective tank.

Advantageously, the heating arrangement for one or more of the tanks that are heated, comprise a heat jacket or mantle that is arranged outside the tank, so that the warm liquid can be flown into and out of a void arranged between the external wall surface of the tank and the internal wall surface of the heat jacket.

Advantageously, the heating arrangement may comprise a heat exchanger and a separate heating loop. In such embodiments, the liquid in the separate heating loop is heated in the heat exchanger by the cooling liquid of the engine cooling system. This heat is then transported to the heat arrangement of the tank / tanks in question.

It is disclosed that the heating arrangement of at least one of the silage tank, the heating tank, and the evaporation tank may comprises a heat jacket, which together with the respective tank forms a void between the heat jacket and the tank, wherein the heating arrangement comprises heated liquid lines in fluid communication with the void.

It is disclosed that heated liquid lines, i.e. the lines conducting the heated liquid, can be arranged in fluid communication with a heat exchanger, wherein the cooling liquid circulation system (for the main engine) is in fluid communication with the heat exchanger. The heat exchanger can then be configured to transfer thermal energy from the cooling liquid in the cooling liquid circulation system to the heated liquid in the heated liquid lines.

In this manner, one can perform maintenance on the silage facility without interrupting the operation of the main engine, since the heated liquid in the heated liquid lines is not in fluid communication with the cooling liquid of the cooling liquid circulation system.

It is disclosed that the silage facility has two or more silage tanks, which are arranged in parallel. This means that they are connected with lines to the same heating tank.

In this way, one silage tank may be performing and completing an autolysis process, while another silage tank simultaneously is being filled with marine feed.

Advantageously, the silage facility can comprise a bone separator arranged downstream of the silage tank and upstream of the heating tank. The decanter can be a tricanter comprising a tricanter bone outlet, a separated silage outlet, and a tricanter oil outlet.

The silage facility can further comprise an oil tank which is arranged downstream of the decanter.

At least one of the heating tank and the evaporation tank can advantageously be provided with an inert gas purging arrangement connected to an upper portion of the tank. Advantageously, the silage tank may also be provided with a purging arrangement. The purging arrangement may typically be configured to purge the top section of the tank in question with nitrogen gas, or a mix of inert gases, such as a mix of nitrogen gas and CO₂. Typically, in such embodiments the inert gas contents may be about 98 %, and advantageously not less than 98 %. The inert gas contents may also be 98 % or above.

Notably, when a tank has been emptied, the purging arrangement can be used for gas freeing of the tank.

The silage facility can in some embodiments further comprise a return line that extends from downstream of the silage tank, in communication with the silage tank outlet, to the marine feed inlet line or a mill that is arranged in association with that silage tank.

Advantageously, the inner volume of the heating tank is at least as large as the inner volume of the silage tank.

The heating tank and the evaporation tank can be arranged adjacent each other. Moreover, in some embodiments, they may also even be arranged within a common insulation jacket. In this manner, since both these tanks shall be heated to a significant temperature, one is able to heat them simultaneously with the same heat source. Moreover, one is able to exploit the thermal energy of one tank to heat the adjacent tank.

In some embodiments, at least one silage tank, and one of the heating tank and the evaporation tank, are integrated with the hull of the fishing ship.

With the term integrated tank is herein meant an envelope configured for containment of a marine feed, for the purpose of storage and/or for use in a process step, which may be stressed in the same manner and by the same loads which stress the contiguous hull structure, and which is essential to the structural completeness of the hull of the ship. Typically, such an integrated tank is built adjacent a side wall or bottom part of the hull of the ship. Typically, in some of such embodiments, the shape of the hull may partly govern the shape of a wall of the integrated tank.

In some advantageous embodiments, the silage facility may comprise two silage tanks, a heating tank, and an evaporation tank, which are all integrated with the hull of the ship.

In some embodiments, the ship is a trawler provided with trawling equipment and fish processing equipment, such as a fileting machine or gutting machine, and a freezer storage configured to freeze and store fish processed in said fish processing equipment.

According to a second aspect of the present invention, there is provided a method of producing a fish protein concentrate silage product with a silage facility installed on a fishing ship having permanently installed fishing equipment, fish processing equipment, and a fish storage arrangement for storage of processed fish. According to the invention, the method comprises the following steps:
a) receiving a marine feed in a silage tank;
b) adding acid to the silage tank and heating the interior of the silage tank to thereby perform an autolysis process of the marine feed, thereby producing an autolyzed silage;
c) after step b), transferring the autolyzed silage from the silage tank to a heating tank, and heating the autolyzed silage to a temperature higher than the temperature in the silage tank, thereby producing a heated silage;
d) after step c), transferring the heated silage to a decanter and separating the heated silage into marine oil and a separated silage;
e) transferring the oil separated in step d) into an oil tank;
f) transferring the separated silage into an evaporation tank, and removing water from the separated silage in the evaporation tank, thereby producing the fish protein concentrate (FPC) silage product;
g) after step f), transferring the fish protein concentrate silage product, to a storage tank on the fishing ship.

Advantageously, step a) may involve milling the marine feed with a mill before introducing it into the silage tank.

The temperature in the heating tank used in step c) can advantageously be between 70 to 90 °C.

In embodiments of the invention, where there is no separate heating tank, heating of the autolyzed silage can be performed in the silage tank itself. That is, in the silage tank, the autolysis process is first performed with an autolysis temperature of typically 35-40 °C. Thereafter a heating process is performed in the silage tank, typically with temperatures of about 70-90 °C.

In some embodiments, the method may involve the following step:
h) after step g), transferring the marine concentrated silage product to a receiving facility on shore.

Advantageously, step b), step c) or step f) may comprise heating of the silage tank, heating tank, or evaporation tank, respectively, by transferring thermal energy from an engine cooling system of the main engine of the fishing ship, to a heating arrangement that is configured to heat the silage tank, heating tank, or evaporation tank, respectively.

Notably, not only fish entrails resulting from fileting or gutting of fish may be used as marine feed in the silage process. In some instances, a fishing ship, such as a trawler, with the ship-integrated silage facility according to the invention, may feed whole fish or other marine organisms directly in the process, without any previous step. This may typically be for providing marine protein concentrate to producers of animal food, such as fish feed for fish farmers. Ingredients in such a protein concentrate may typically be copepod, sandeel, and brisling.

With the term integrated tank is herein meant an envelope configured for containment of a marine feed, for the purpose of storage or used in a process step, which may be stressed in the same manner and by the same loads which stress the contiguous hull structure, and which is essential to the structural completeness of the hull of the ship.

According to a third aspect of the present invention, there is provided fishing ship comprising fishing equipment, fish processing equipment, and a fish storage arrangement for storage of processed fish, a main engine for propulsion of the fishing ship, and a silage facility configured to receive marine feed and to process it into a fish protein concentrate silage product. The silage facility comprises an evaporation tank comprising an agitator and a heating arrangement. The evaporation tank is configured to receive a silage product, and the evaporation tank is configured to remove water from the silage product, as it is connected to a vacuum unit, and to produce a fish protein concentrate silage product that comprises less water than the separated silage. According to the third aspect of the invention, the heating arrangement has a jacket that is arranged external to at least a portion of the evaporation tank, and which defines a void between the jacket and an external surface of the evaporation tank. Moreover, the heating arrangement has a heat source configured to transfer energy into the void, thereby heating the wall of the evaporation tank.

Advantageously, the heat source is in form of a source of heated fluid or electric heater cables configured to conduct electric current. Other heat sources can however also be possible, for instance electric current-conducting cables that induce heat in the metal of the evaporation tank (induction heating).

### Brief description of drawings

While the invention has been discussed in general terms above, a more detailed example of embodiment will be given in the following with reference to the drawings, in which
- Fig. 1: is a process diagram showing a silage facility installed on a ship;
- Fig. 2: is a schematic diagram of the evaporation tank, which is part of the silage facility shown in Fig. 1;
- Fig. 3: is a schematic diagram of the heating arrangement of one of the heated tanks of the silage facility;
- Fig. 4: is a top view of a schematic diagram showing one deck of the ship, on which the silage facility is installed;
- Fig. 5: is a side cross section view along the direction of the ship keel, of a part of the ship hull, showing a storage tank;
- Fig. 6: is a side view showing a diagram of a ship integrated evaporation tank, which is part of the silage facility; and
- Fig. 7: is a side view of a silage tank installed in a fishing ship.

### Detailed description of an example embodiment

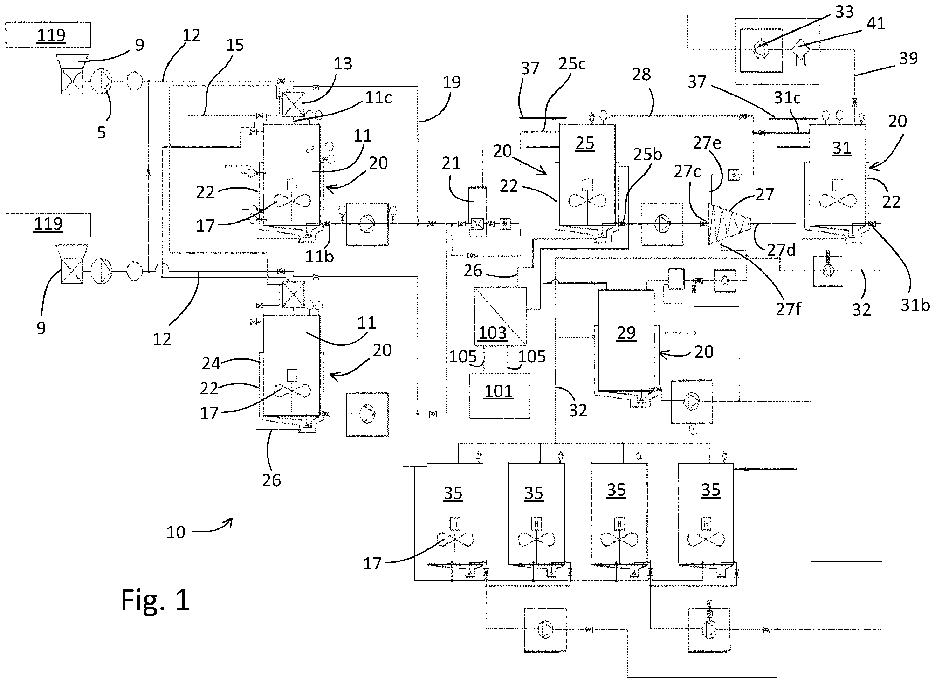

Fig. 1 depicts a schematic diagram of an embodiment of a silage facility 10 arranged on a sea-going vessel / ship. The silage facility 10 has a hydrolysis or autolysis section, with two silage tanks 11. To the silage tanks 11 there is arranged a mill 13, which is configured to mill marine feed, such as fish by-products or other marine biomass, into smaller parts. A marine feed inlet line 12 connects to the mill 13. Also included in the autolysis section, there is an acid supply arrangement 15 configured to supply formic acid to the marine feed. Preferably, the formic acid is supplied to the mills 13, so that the formic acid is mixed into the marine feed during the milling process.

A silage tank inlet 11c is arranged between the mill 13 and the silage tank 11.

Upstream of the marine feed inlet line 12, there is arranged a rough mill 9. The rough mill 9 is configured to receive marine feed, here in the form of fish entrails, directly from a fish filet machine 119. A pump 5 is configured to pump the milled marine feed through the marine feed inlet line 12, to the mill 13.

By disintegrating the marine feed and mixing in an appropriate amount of acid, an autolysis is started in the silage tank. In this process, enzymes disintegrate the marine feed, resulting in a more liquid mass. The autolysis process occurs typically at temperatures between 5 and 40 °C. The speed of the autolysis process increases with temperature, up to about 40 °C. Thus, to obtain a rapid autolysis process, the temperature inside the silage tank is kept at about 37 to 40 °C. The formic acid is added to the marine feed, so that acidity is kept within an advantageous pH range of 3,5 to 4,5. The exact temperature and acidity may vary according to which type of marine feed, which is supplied to the silage tank 11.

Advantageously, the silage tanks 11 are provided with a heating arrangement 20. The heating arrangement 20 comprises a heat jacket 22 that surrounds at least a portion of the silage tank 11. The heat jacket 22 forms a void between its inner face and the outer face of the silage tank structure. To heat the silage tank 11, along with its contents, a heated liquid is circulated into and out of the said void. This will be discussed in closer detail below.

Inside the silage tank 11, there is arranged an agitator 17. The agitator contributes in mixing in the supplied acid evenly to the entire contents of the silage tank 11. Furthermore, the agitator 17 contributes in keeping an even temperature throughout the contents, as heat is transferred from the void of the silage tank heat jacket 11a, through the wall of the silage tank 11, and into the marine feed. Preferably, the agitator 17 is actuated with a hydraulic motor (not shown). The hydraulic motor may be powered with the hydraulic power network of the ship.

In the embodiment shown in Fig. 1, a recirculation line 19 is arranged between a silage tank outlet 11b and the mill 13, which is arranged at the silage tank inlet 11c. The recirculation line 19 may be used if the operator decides to repeat the milling process in the mill 13. Moreover, it can be used as a measure to obtain an even mass.

By heating the marine feed inside the silage tank 11 by using the heating arrangement 20, i.e. by flowing a heated liquid through the void of the silage tank heat jacket 11a, an even heating of the marine feed is provided. Notably, it is desirable to avoid excessive heating of the marine feed, since that would halt the autolysis process and since it may also lead to burning of fish bones. Excessive heating of the marine feed could also result in local coagulation of the marine feed at the warmest surfaces of the tank.

As appears on the overview diagram of Fig. 1, pumps and valves are arranged in various positions to provide throughflow of the silage mass between the various sections of the silage facility 10. Such pumps and valves will however not be discussed further.

Out of the silage tank 11, through the silage tank outlet 11b, flows an autolyzed silage, after the autolysis process has been performed. Downstream of the silage tank outlet 11b, there is arranged a bone separator 21. The bone separator 21 is configured to remove fish bones from the autolyzed silage that exits the silage tank 11, i.e. after the autolysis process. In the shown embodiment, there is also a bone separator by-pass line 23, making the operator able to flow the mass past the bone separator 21.

Downstream of the autolysis section discussed above, there is a separation section. The separation section comprises a heating tank 25 and a decanter 27.

In the heating tank 25, the mass is heated to about 80 to 90 °C. As with the silage tanks 11, the heating tank 25 is provided with a heating arrangement 20, comprising a heat jacket 22 that provides a void 24 between the jacket and the tank wall. The mass inside the heating tank 25 is heated by flowing a heated liquid into and out of the said void, so that the tank wall of the heating tank 25 is heated, which further heats the mass inside. Advantageously, as will be discussed in detail further below, the warm heated liquid used to heat the heating tank 25 can be heated by the cooling liquid used to cool the ship's main engine.

The heating tank 25 is also provided with an agitator 17.

The heating tank 25 heats the mass to prepare it for separation of marine oil. To obtain a good oil separation process, the oil must not be excessively emulsified. Hence, the operator needs to carefully adjust the speed of the agitator and the heat inside the heating tank 25.

Notably, prior art solutions use a heat exchanger to heat the marine mass before separating out the oil in the decanter. This known solution often involves problems due to fish bones and calcium burning and settling on the warm surfaces of the heat exchanger. Such problems are avoided with the present solution.

The heating tank 25 has a heating tank inlet 25c and a heating tank outlet 25b. From the heating tank outlet 25b, the heated mass, herein termed a heated silage, is flown into a decanter 27. In this embodiment, the decanter is a tricanter. The tricanter 27 has a tricanter inlet 27c and three tricanter outlets.

One of the outlets of the tricanter 27 is a tricanter bone outlet 27d, through which remaining fish bones that are separated out from the mass, are transported.

Another of the outlets of the tricanter is a separated silage outlet 27e, through which an oil-less or oil-poor marine silage is transported out of the tricanter 27. Herein, the marine silage exiting the tricanter 27 through the separated silage outlet 27e is named a separated silage.

A third outlet of the tricanter 27 is a tricanter oil outlet 27f, through which marine oil is flown. This marine oil is separated out of the heated silage mass coming from the heating tank 25. The tricanter oil outlet 27f connects to an oil tank 29, which is configured to store the marine oil.

The tricanter silage outlet 27e connects to an evaporation tank 31, arranged downstream of the tricanter 27. In the embodiment shown in Fig. 1, the tricanter silage outlet 27e is also connected to a silage recycling line 28, which connects the tricanter silage outlet 27e to the heating tank 25. Thus, the operator may flow the separated silage mass, now holding less marine oil, back to the heating tank. Typically, the operator may run the tricanter 27 for some time, in which it is optimally configured for oil separation. Then, when the oil content of the mass has become satisfactory low, he may configure/optimize the tricanter for bone separation, to obtain a silage mass that holds low amounts of bones and oil.

After having run the mass through the separation section, in which the marine oil has been separated and is stored in the oil tank 29, and in which possible remaining fish bones is removed, the silage mass, the separated silage, is conveyed into an evaporation section.

There may advantageously be an inert gas purging arrangement in connection with the oil tank 29, which keeps the gas phase above the stored oil inert to prevent rancidity in the oil.

The evaporation section comprises an evaporation tank 31. In the evaporation tank 31, water is removed to obtain a more concentrated silage mass. A significant amount of the mass can be removed in this way, such as 30 to more than 50 percent of the mass. In this way, valuable storage space in the vessel is saved, since the removed water can be disposed into the sea.

The evaporation tank 31 comprises a heating arrangement 20, by means of which the mass inside the evaporation tank 31 is typically heated to about 70-90 °C. Moreover, to assist in evaporating the water out of the silage mass, a negative pressure is provided inside the evaporation tank 31. By negative pressure is meant a pressure that is lower than the ambient pressure.

The negative pressure is provided with a vacuum pump 33, which is connected to the evaporation tank 31. The pressure may typically be about 0,5 bar, i.e. a pressure of about 0,5 bar less than the atmospheric pressure.

An agitator 17 is arranged in the evaporation tank 31.

When water has been removed from the separated silage in the evaporation tank 31, a fish protein concentrate (FPC) silage product is flown out of the evaporation tank outlet 31b. An FPC silage product line 32 connects the evaporation tank outlet 31b to a plurality of storage tanks 35, which are configured to store concentrated marine protein silage in the ship. Advantageously, the storage tanks 35 are integrated with the hull of the ship. This will be discussed in more detail further below.

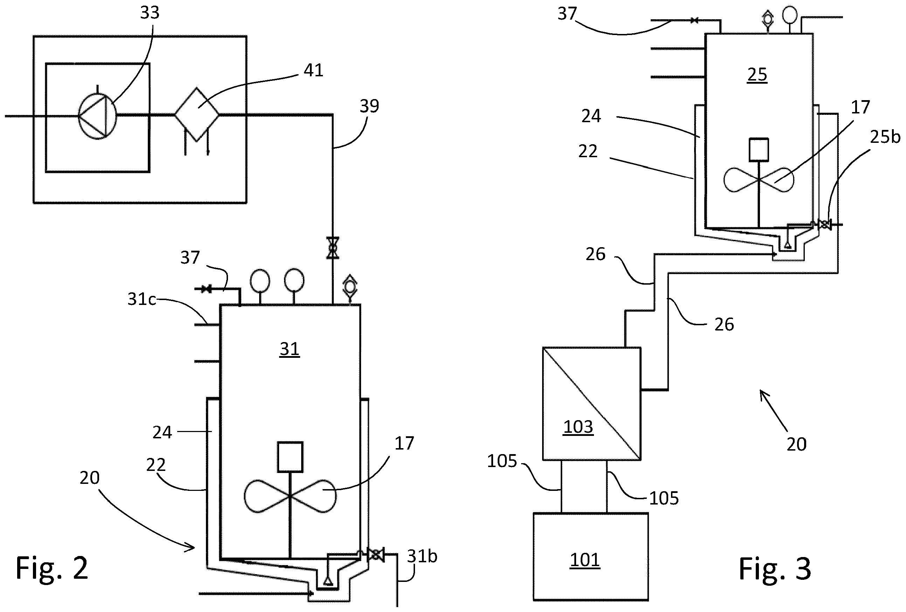

Still referring to Fig. 1, schematically shown is the main engine 101 of the ship, in which the silage facility 10 is installed. The main engine 101 comprises an engine cooling system, with a cooling liquid circulation system. To cool the cooling liquid that has been heated by the engine, the cooling liquid is transported to a heat exchanger 103, through cooling liquid pipes 105. As briefly discussed above, the thermal energy of the cooling liquid that cools the engine 101 is used to heat one or more of the various heated tanks of the silage facility 10. The heating arrangement 20, which may be installed in association with one or more tanks, will be discussed in better detail with reference to Fig. 3 below.

It will be understood that additional heating measures may be used in addition to or instead of the shown heating arrangement that uses thermal energy from the ship's engine. Moreover, in some embodiments, thermal energy from the ship's engine may be transferred to only one tank of the silage facility 10, for instance the heating tank 25, the silage tank 11, or the evaporation tank 31. In other embodiments, thermal energy from the engine may be transferred to two tanks, three of the tanks, or even both silage tanks 11, the heating tank 25 and the evaporation tank 31.

Fig. 2 depicts the evaporation tank 31 with a more detailed view. The marine silage inside the tank is heated by means of the heating arrangement 20. The heating arrangement 20 comprises a heat jacket 22, which together with the evaporation tank 31 defines a void 24. The marine mass inside the evaporation tank 31 is heated by flowing a heated liquid through this void 24. Advantageously, the warm liquid is the cooling liquid for the ship's main engine.

Instead of heating the evaporation tank 31 with a warm liquid or gas flown into and out of the void 24, other solutions for heating the evaporation tank 31 from the outside can also be used. For instance, one may use electrical heating by arranging heater cables in a distributed manner on the external face of the tank. Advantageously, such heater cables can be covered with a heat-insulating jacket or mantle.

Such alternative heating methods can also be used for the other tanks, such as the silage tank 11 and/or the heating tank 25.

A further advantage of heating the contents of the tanks from the outside of the tanks, is that one obtains an even distribution of the heat transfer. I.e. the tank walls, that typically are made of metal, offer a large heat transfer surface against the contents of the tank. This, combined with the agitation provided by the agitator 17, presents an efficient heat transfer to the contents of the tank, without reaching excessive concentrated temperatures in parts of the contents.

By lowering the pressure within the evaporation tank 31 by operation of the vacuum pump 33, the boiling point of the water inside the silage mass is reduced. This enables the water to be boiled off the silage mass. Moreover, this, and particularly together with the use of the agitator 17, enables water to be removed from the silage product in a quick fashion without reaching excessive temperatures that could damage the product.

During this process, hydrogen gas may be formed in the gas phase in the top portion of the evaporation tank 31. To remove the possibility of an explosive gas being formed in the evaporation tank 31, the evaporation tank 31 is equipped with a nitrogen purging arrangement 37. Advantageously, oxygen sensors and LEL sensors (lower explosion limit) are provided to monitor the gas in the upper portion of the evaporation tank 31.

From the top section of the evaporation tank 31, a vacuum line 39 extends to the vacuum pump 33. A condenser 41 is arranged in the vacuum line 39, before the vacuum pump 33. The condenser 41 is configured to condense water.

Fig. 3 depicts the heating tank 25 of the ensilage facility 10 of Fig. 1 in better detail. In this embodiment, the heating tank 25 is also provided with a heating arrangement 20, as the heating arrangement of the evaporation tank 31. The heating arrangement 20 comprises a heat jacket 22 that is arranged about the heating tank 25. A void 24 is arranged between the heat jacket 22 and the heating tank 25. As discussed above with reference to Fig. 2, the marine product inside the heating tank is heated by circulating a heated liquid into and out of said void 24.

In some embodiments of the heating arrangement 20, the void 24 is arranged along at least 50 % of the vertical extension of the tank, such as the heating tank 25, or evaporation tank 31. Since the heat exchange area between heat jacket 22 and tank wall is larger than a conventional system comprising e.g. a plate or tubular heat exchanger, the surface temperatures will be less. This removes the burning issue of calcium from bones, in addition to reaching excessive heat concentrations in the silage product.

Schematically shown in Fig. 3 is the main engine 101 of the ship. As discussed above, the main engine 101 comprises an engine cooling system, with a cooling liquid circulation system. To cool the cooling liquid that has been heated by the engine, the cooling liquid is transported to the heat exchanger 103, through cooling liquid pipes 105. Between the void 24 inside the heat jacket 22 and the heat exchanger 103 extend a pair of heated liquid lines 26. The heated liquid lines 26 transport heated liquid between the heat exchanger 103, where the heated liquid is heated by thermal energy from the engine's cooling liquid, and the void 24.

Hence, thermal energy from the ship's main engine 101 is transferred to the heated liquid in the heat exchanger 103, and this thermal energy is passed on to the heating tank 25 and its contents, when flowing through the void 24. As shown in Fig. 3, the inlet and outlets of the heated liquid into and out of the void 24 is arranged at different vertical levels.

In some embodiments, baffles (not shown) may be arranged inside the void to provide a desired flow path of the heated liquid through the void 24. In other embodiments, a bent pipe or tube may extend through a closed-in liquid inside the void, typically by being wound several turns about the body of the heating tank 25. In still further embodiments, as discussed above, the heating may occur with an electric heating system using for instance a heater cable.

The agitator 17 of the heating tank 25 provides an even distribution of temperature inside the heating tank 25. Moreover, by providing some circulation in the silage mass in the heating tank 25, the operator ensures that the same portion of silage mass does not remain in contact with the inner, warm surface of the heating tank for an excessive period. Excessive heating of parts of the silage mass could result in coagulation of the mass and deterioration of the final product.

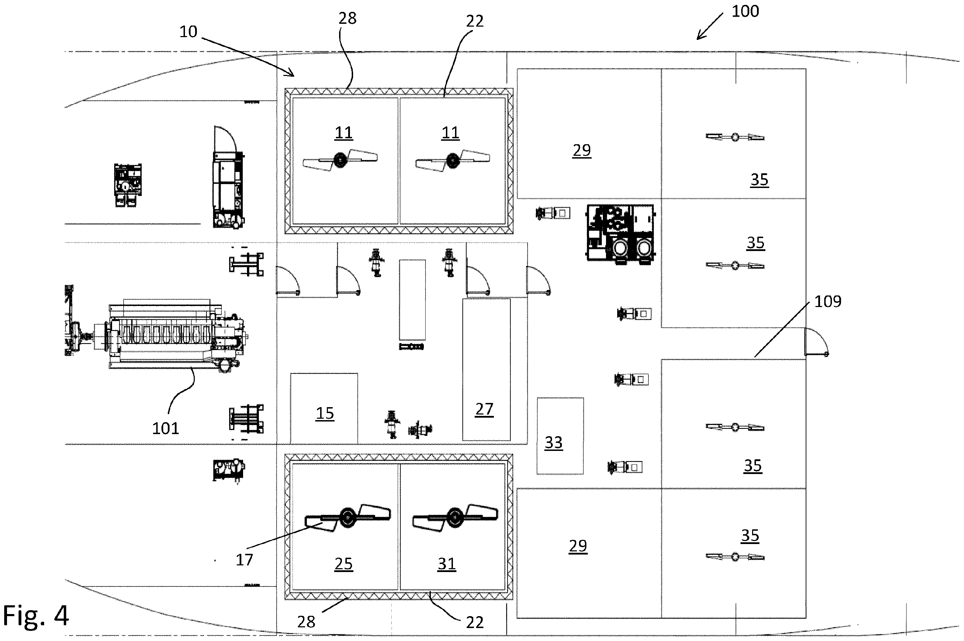

Fig. 4 is a top view showing a lower deck of a middle to aft section of a ship 100. On this deck, and partly integrated with the hull of the ship 100, the silage facility 10 is installed.

In some embodiments, the ship 100 may be a fishing boat, such as a trawler. In other embodiments, the ship 100 may merely be used to collect marine feed from other fishing boats at sea, and to produce a concentrated silage product from the marine feed while out on the sea.

As shown in Fig. 4, the two silage tanks 11 on the one side, and the heating tank 25 and the evaporation tank 31 on the other side, are arranged substantially symmetrically about the longitudinal center line of the ship 100.

As shown in Fig. 4, in this embodiment, the two silage tanks 11, and the heating tank 25 and the evaporation 31, are arranged in a position towards the side of the hull of the ship 100.

The heating tank 25 and the evaporation tank 31, which normally will be heated to about the same temperature (typically 70-90 °C), are positioned adjacent to each other. In the shown embodiment, they are arranged within one common insulation jacket 28, which may be part of the heating arrangement 20 discussed above.

The heating tank 25 and the evaporation tank 31 may in some embodiments share the same void 24.

The two silage tanks 11 are also arranged adjacent each other.

The two silage tanks 11 are in this embodiment sharing a common insulation jacket 28.

In this embodiment, the two silage tanks 11 also share the same void 24 of the heating arrangement 20.

Also arranged symmetrically about the center line of the ship 100, are two opposite oil tanks 29.

The two oil tanks 29 are also arranged adjacent the side wall of the hull of the ship 100.

In the shown embodiment, the silage facility 10 is provided with four storage tanks 35. The storage tanks 35 are also arranged symmetrically about the center line of the ship 100. Also, at least one storage tank 35 on each side of the center line of the ship is arranged adjacent the hull wall.

A personnel access way 109 is arranged along the center line of the ship 100, between two oppositely arranged storage tanks 35.

In the view shown in Fig. 4, the heat exchanger 103, the heated liquid lines 26, and the cooling liquid pipes 105 are not shown, but may be arranged as deemed fit by the person skilled in the art.

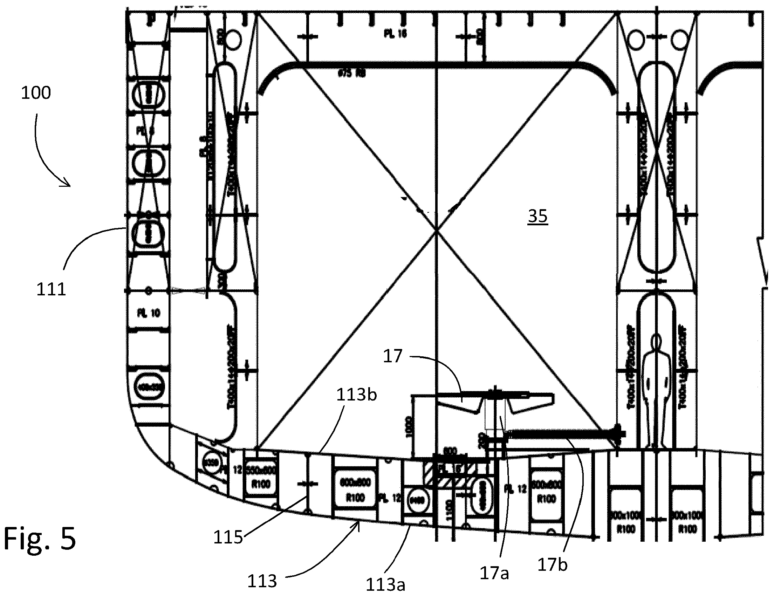

Fig. 5 shows a side cross section view through a portion of the hull of the ship 100 shown in Fig. 4. A storage tank 35 is shown, which is integrated with the hull of the ship 100. At the left-hand side of Fig. 5, a side wall 111 of the hull is shown. On the lower portion of Fig. 5 the bottom 113 of the hull is shown.

Between the very lower plate of the hull bottom 113 and an upper plate 113b of the bottom 113, there are arranged a plurality of scantling ribs 115. Notably, the bottom of the storage tank 35 is constituted by the upper plate 113b of the hull bottom 113. This is thus an example of a tank that is integrated with the ship hull 100.

Attached to the bottom of the storage tank 35, namely the upper plate 113b of the hull bottom 113, there is a storage tank agitator 17. The agitator 17 is actuated with a hydraulic motor 17a, which is powered with a hydraulic line 17b. Advantageously, the hydraulic lines 17b can be connected to the hydraulic network of the ship 100.

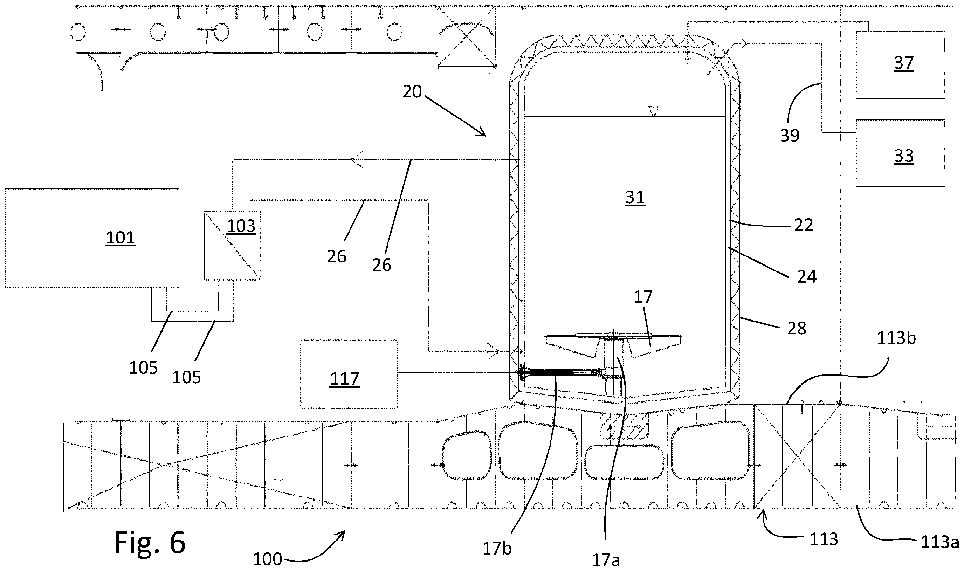

Fig. 6 shows a side view of the evaporation tank 31, installed in the ship 100 and integrated with the hull of the ship. The main engine 101 of the ship is schematically shown, from which thermal energy is transferred to the contents of the evaporation tank 31 by means of the heating arrangement 20, as discussed above. In this view, the gas phase in the top section of the evaporation tank 31 is indicated.

In Fig. 6, an HPU 117 (hydraulic power unit) of the ship 100 is also shown, delivering power to the hydraulic motor 17a of the agitator 17.

In some embodiments, the silage facility 10 may be installed in a lower deck of the ship, while fish processing equipment, such as a fileting machine or gutting machine (not shown) may be arranged on the deck immediately above the lower deck. In this manner, the fish by-products, as fish skin and heads, can simply be moved down to the silage facility by means of gravity. Advantageously, the mill 13 of the silage facility may be positioned substantially directly below the fish processing equipment on the deck above.

The inner volume of the silage tanks 11 may typically be above 50 m², advantageously between 60 and 120 m². The heating tank 25 and the evaporation tank 31 may advantageously substantially be of the same size.

The inner volume of the storage tanks 35 may typically be above 100 m², advantageously between 120 and 300 m² each.

The size of the heating tank 25 is sufficient to receive the entire contents ("the autolyzed silage") from one silage tank 11. In that way, the entire contents can be heated simultaneously and homogenously inside one tank. This differs from known solutions that use a heat exchanger, through which the silage mass is conveyed while heated. With the shown solution, the silage tank 11 can be quickly emptied after the hydrolysis process, rendering the tank available for a new batch to be autolyzed.

The processing time needed for the autolysis step inside the silage tank 11, is advantageously less than 24 hours, or at least less than 48 hours. Hence, if less than 24 hours, the operator may run one batch through one silage tank 11 each day. In such embodiments, it will be advantageous to have two silage tanks 11, so that he may start one autolysis step each day, when at sea.

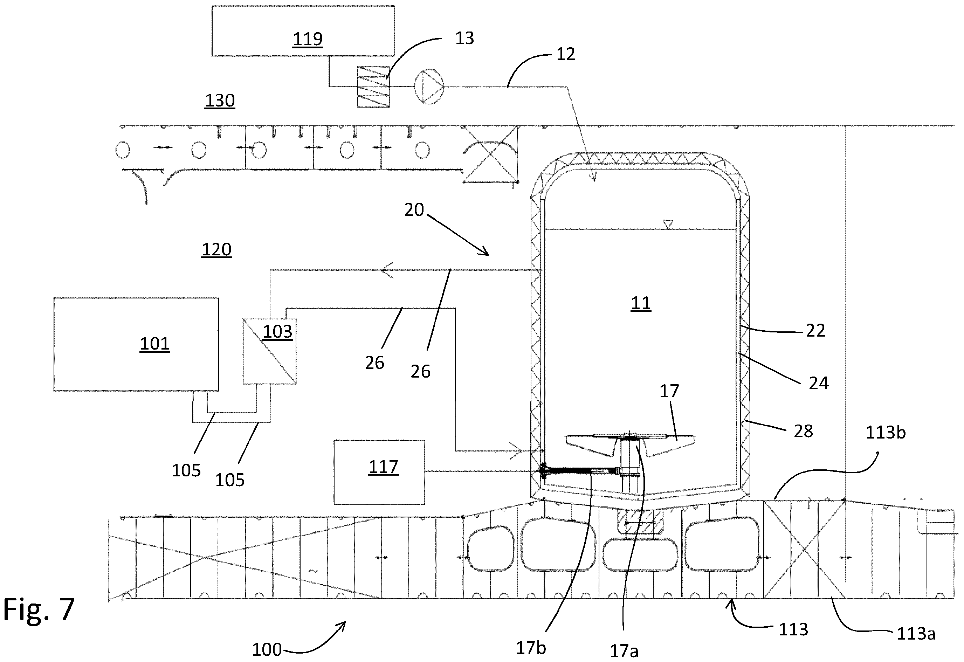

Fig. 7 is a schematic side view of a silage tank 11 which is built on the upper plate 113b of the hull bottom 113 of the ship 100. The silage tank 11 and the heating arrangement 20 has several components that have the same function as components shown in Fig. 6, which shows the evaporation tank 31.

In Fig. 7 it can be seen how the silage tank 11 is arranged at a lower deck 120, which is below another deck 130 on which there is installed a fileting machine 119. The mill 13 is connected to a waste outlet of the fileting machine 119, through which fish entrails (heads, livers, skin etc.) is transported. Downstream of the mill 13 the silage tank 11 receives the fish entrails. The acid supply arrangement 15 is not shown on this drawing, although acid will be mixed into the marine feed in the silage tank, such as when passing through the mill 13 or after.

Notably, the fish entrails can with the discussed solution move directly from the fish processing equipment, such as the fileting machine 119 shown in Fig. 7, to the silage tank 11, where the autolysis process can be started. Thus, there need not be any intermediate storage of the fish entrails. This contributes to high quality of the end product, namely the fish protein concentrate (FPC) silage product from marine feed.

It will be understood that the marine feed used to obtain the fish protein concentrate (FPC) silage product does not need to relate to fish products only, but may also relate to marine feed from other marine species, such as crustaceans.

Also, the marine feed used does not need to comprise fish entrails stemming from fish processing equipment. Instead, the marine feed may be whole fish, typically fish which is not suited for human consumption or which is not well paid. Also, a source of marine feed may be by-catch, i.e. fish of other species than the what the ship operator is aiming at (e.g. some occasional haddocks that are caught when fishing for cod).

In addition to the acid supply arrangement 15 indicated in Fig. 1, the silage facility 10 may comprise additional acid supply arrangements that are configured to adjust the acidity of the processed marine mass. By monitoring and controlling the acidity, the quality of the FPC silage product is ensured.

## Claims

1. A fishing ship (100) comprising fishing equipment, fish processing equipment (119), and a fish storage arrangement for storage of processed fish, a main engine (101) for propulsion of the fishing ship, and a silage facility (10) configured to receive marine feed and to process it into a fish protein concentrate silage product, wherein the silage facility (10) comprises
- a marine feed inlet line (12);
- a silage tank (11) connected to the marine feed inlet line (12) and comprising a silage tank agitator (17) and a heating arrangement (20), the silage tank (11) being configured to produce an autolyzed silage of the marine feed;
- an acid supply arrangement (15) configured to supply an acid to the marine feed in the silage tank (11);
- a decanter (27) configured to receive the silage and to separate it into oil and a separated silage, wherein the decanter comprises an oil outlet (27f) and a separated silage outlet (27e);
- an evaporation tank (31) comprising an agitator (17) and a heating arrangement (20), the evaporation tank being configured to receive the separated silage, and wherein the evaporation tank (31) is configured to remove water from the received separated silage, as it is connected to a vacuum unit (33), and to produce a fish protein concentrate silage product that comprises less water than the separated silage;
and wherein the ship (100) comprises a storage tank (35) configured to receive the fish protein concentrate silage product.

2. A fishing ship (100) according to claim 1, **characterized in that** the silage facility (10) further comprises a heating tank (25) comprising an agitator and a heating arrangement (20), the heating tank being configured to receive the autolyzed silage and to produce a heated silage of the autolyzed silage.

3. A fishing ship (100) according to claim 1 or claim 2, **characterized in that** heating arrangement (20) of the heating tank (25) and/or of the evaporation tank (31) are arranged only on the external side of the heating tank (25) and/or the evaporation tank (31), respectively.

4. A fishing ship (100) according to one of the preceding claims, **characterized in that** the silage facility (10) comprises a bone separator (21) arranged downstream of the silage tank (11) and upstream of the heating tank (25), and that the decanter (27) is a tricanter, as it comprises a tricanter bone outlet (27d), a separated silage outlet (27e), and a tricanter oil outlet (27f).

5. A fishing ship (100) according to any one of the preceding claims, **characterized in that** the silage facility (10) further comprises an oil tank (29) which is arranged downstream of the decanter (27).

6. A fishing ship (100) according to any one of the preceding claims, **characterized in that** at least one of the heating tank (25) and the evaporation tank (31) is provided with an inert gas purging arrangement (37) connected to an upper portion of the tank.

7. A fishing ship (100) according to any one of the preceding claims, **characterized in that** the silage facility (10) further comprises a return line (19) that extends from downstream of the silage tank (11) to the marine feed inlet line (12) or a mill (13) that is arranged in association with that silage tank (11).

8. A fishing ship (100) according to any one of the preceding claims, **characterized in that** the inner volume of the heating tank (25) is at least as large as the inner volume of the silage tank (11).

9. A fishing ship (100) according to any one of the preceding claims, **characterized in that** the heating tank (25) and the evaporation tank (31) are arranged adjacent each other and within a common insulation jacket (28).

10. A fishing ship (100) according to any one of the preceding claims, **characterized in that** at least one silage tank (11), and one of the heating tank (25) and evaporation tank (31), are integrated with the hull of the fishing ship (100).

11. A method of producing a fish protein concentrate silage product with a silage facility (10) installed on a fishing ship (100) having permanently installed fishing equipment, fish processing equipment, and a fish storage arrangement for storage of processed fish, comprising the following steps:
a) receiving a marine feed in a silage tank (11);
b) adding acid to the silage tank (11) and heating the interior of the silage tank to thereby perform an autolysis process of the marine feed, thereby producing an autolyzed silage;
c) after step b), transferring the autolyzed silage from the silage tank (11) to a heating tank (25), and heating the autolyzed silage to a temperature higher than the temperature in the silage tank, thereby producing a heated silage;
d) after step c), transferring the heated silage to a decanter (27) and separating the heated silage into marine oil and a separated silage;
e) transferring the oil separated in step d) into an oil tank (29);
f) transferring the separated silage into an evaporation tank (31), and removing water from the separated silage in the evaporation tank (31), thereby producing the fish protein concentrate silage product;
g) after step f), transferring the fish protein concentrate silage product, to a storage tank (35) on the fishing ship (100).

12. A method according to claim 11, further comprising the following step:
h) after step g), transferring the marine concentrated silage product to a receiving facility on shore.

13. A method according to claim 11 or claim 12, wherein step b), step c) or step f) comprises heating of the silage tank (11), heating tank (25), or evaporation tank (31), respectively, by transferring thermal energy from an engine cooling system of the main engine (101) of the fishing ship (100) to a heating arrangement (20) that is configured to heat the silage tank (11), heating tank (25), or evaporation tank (31), respectively.

14. A method according to claim 11, 12 or 13, wherein step b), step c) or step f) comprises heating of the silage tank (11), heating tank (25), or evaporation tank (31), respectively, by transferring a warm liquid into a void (24) between a heat jacket (22) or mantle arranged exterior to the tank, and the external surface of the tank.

15. A fishing ship (100) comprising fishing equipment, fish processing equipment (119), and a fish storage arrangement for storage of processed fish, a main engine (101) for propulsion of the fishing ship, and a silage facility (10) configured to receive marine feed and to process it into a fish protein concentrate silage product, wherein the silage facility (10) comprises an evaporation tank (31) comprising an agitator (17) and a heating arrangement (20), the evaporation tank being configured to receive a silage product, and wherein the evaporation tank (31) is configured to remove water from the silage product, as it is connected to a vacuum unit (33), and to produce a fish protein concentrate silage product that comprises less water than the separated silage, wherein the heating arrangement (20) comprises
- a jacket (22) arranged external to at least a portion of the evaporation tank (31) and defining a void between the jacket and an external surface of the evaporation tank (31);
- a heat source (26) configured to transfer energy into the void (24), thereby heating the wall of the evaporation tank (31);
- wherein the heat source is in form of a heated fluid or electric heater cables.

## Patentansprüche

1. Fischereischiff (100) mit einer Fischereiausrüstung, einer Fischverarbeitungsausrüstung (119) und einer Fischlagerungsanordnung zur Lagerung von verarbeitetem Fisch, einer Hauptmaschine (101) für den Antrieb des Fischereischiffs und einer Silageanlage (10), die so konfiguriert ist, dass sie Meeresfutter aufnimmt und es zu einem Fischproteinkonzentrat-Silageprodukt verarbeitet, wobei die Silageanlage (10) Folgendes umfasst
- eine Meeresfuttereinlassleitung (12);
- einen Silagetank (11), der mit der Meeresfuttereinlassleitung (12) verbunden ist und ein Silagetankrührwerk (17) und eine Heizanordnung (20) umfasst, wobei der Silagetank (11) so konfiguriert ist, dass er eine autolysierte Silage des Meeresfutters erzeugt;
- eine Säurezufuhrvorrichtung (15), die so konfiguriert ist, dass sie dem Meeresfutter im Silagetank (11) eine Säure zuführt;
- einen Dekanter (27), der so konfiguriert ist, dass er die Silage aufnimmt und sie in Öl und abgetrennte Silage trennt, wobei der Dekanter einen Ölauslass (27f) und einen Auslass für abgetrennte Silage (27e) umfasst;
- einen Verdampfungstank (31), der ein Rührwerk (17) und eine Heizanordnung (20) umfasst, wobei der Verdampfungstank so konfiguriert ist, dass er die abgetrennte Silage aufnimmt, und wobei der Verdampfungstank (31) so konfiguriert ist, dass er Wasser aus der aufgenommenen abgetrennten Silage entfernt, wenn er mit einer Vakuumeinheit (33) verbunden ist, um ein Fischproteinkonzentrat-Silageprodukt zu erzeugen, das weniger Wasser als die abgetrennte Silage aufweist;
und wobei das Schiff (100) einen Lagertank (35) umfasst, der zur Aufnahme des Fischproteinkonzentrat-Silageprodukts konfiguriert ist.

2. Fischereischiff (100) nach Anspruch 1, **dadurch gekennzeichnet, dass** die Silageanlage (10) ferner einen Heiztank (25) umfasst, der ein Rührwerk und eine Heizanordnung (20) umfasst, wobei der Heiztank so konfiguriert ist, dass er die autolysierte Silage aufnimmt und eine erhitzte Silage aus der autolysierten Silage erzeugt.

3. Fischereischiff (100) nach Anspruch 1 oder Anspruch 2, **dadurch gekennzeichnet, dass** die Heizanordnung (20) des Heiztanks (25) und/oder des Verdampfungstanks (31) nur an der Außenseite des Heiztanks (25) und/oder des Verdampfungstanks (31) angeordnet ist.

4. Fischereischiff (100) nach einem der vorhergehenden Ansprüche, **dadurch gekennzeichnet, dass** die Silageanlage (10) einen Knochenabscheider (21) umfasst, der stromabwärts des Silagetanks (11) und stromaufwärts des Heiztanks (25) angeordnet ist, und dass der Dekanter (27) ein Dreiphasendekanter ist, da er einen Knochenauslass (27d), einen Auslass (27e) für separierte Silage und einen Ölauslass (27f) umfasst.

5. Fischereischiff (100) nach einem der vorhergehenden Ansprüche, **dadurch gekennzeichnet, dass** die Silageanlage (10) ferner einen Öltank (29) umfasst, der dem Dekanter (27) nachgeschaltet ist.

6. Fischereischiff (100) nach einem der vorhergehenden Ansprüche, **dadurch gekennzeichnet, dass** der Heiztank (25) und/oder der Verdampfungstank (31) mit einer Inertgasspülvorrichtung (37) versehen ist, die mit einem oberen Teil des Tanks verbunden ist.

7. Fischereischiff (100) nach einem der vorhergehenden Ansprüche, **dadurch gekennzeichnet, dass** die Silageanlage (10) ferner eine Rückführleitung (19) umfasst, die sich von stromabwärts des Silagetanks (11) zu der Meeresfuttereinlassleitung (12) oder einer Mühle (13) erstreckt, die in Verbindung mit dem Silagetank (11) angeordnet ist.

8. Fischereischiff (100) nach einem der vorhergehenden Ansprüche, **dadurch gekennzeichnet, dass** das Innenvolumen des Heiztanks (25) mindestens so groß ist wie das Innenvolumen des Silagetanks (11).

9. Fischereischiff (100) nach einem der vorhergehenden Ansprüche, **dadurch gekennzeichnet, dass** der Heiztank (25) und der Verdampfungstank (31) nebeneinander und innerhalb eines gemeinsamen Isoliermantels (28) angeordnet sind.

10. Fischereischiff (100) nach einem der vorhergehenden Ansprüche, **dadurch gekennzeichnet, dass** der Silagetank (11) und/oder der Heiztank (25) und/oder der Verdampfungstank (31) in den Rumpf des Fischereischiffs (100) integriert ist bzw. sind.

11. Verfahren zur Herstellung eines Fischproteinkonzentrat-Silageprodukts mit einer Silageanlage (10), die auf einem Fischereischiff (100) installiert ist, das eine fest installierte Fischereiausrüstung, eine Fischverarbeitungsausrüstung und eine Fischlagerungsanordnung zur Lagerung von verarbeitetem Fisch aufweist, umfassend die folgenden Schritte:
a) Aufnahme von Meeresfutter in einen Silagetank (11);
b) Zugabe von Säure in den Silagetank (11) und Erhitzen des Inneren des Silagetanks, um dadurch einen Autolyseprozess des Meeresfutters durchzuführen, wodurch eine autolytische Silage erzeugt wird;
c) nach Schritt b) Überführen der autolysierten Silage aus dem Silagetank (11) in einen Heiztank (25) und Erhitzen der autolysierten Silage auf eine Temperatur, die höher als die Temperatur im Silagetank ist, wodurch eine erhitzte Silage erzeugt wird;
d) nach Schritt c), Überführen der erhitzten Silage in einen Dekanter (27) und Trennen der erhitzten Silage in Marineöl und abgetrennte Silage;
e) Umfüllen des in Schritt d) abgeschiedenen Öls in einen Öltank (29);
f) Überführen der abgetrennten Silage in einen Verdampfungstank (31) und Entfernen von Wasser aus der abgetrennten Silage in dem Verdampfungstank (31), wodurch das Fischproteinkonzentrat-Silageprodukt hergestellt wird;
g) nach Schritt f) Umfüllen des Silageprodukts aus Fischproteinkonzentrat in einen Lagertank (35) auf dem Fischereischiff (100).

12. Verfahren nach Anspruch 11, das außerdem den folgenden Schritt umfasst:
h) nach Schritt g) Verbringung des konzentrierten Silageprodukts aus dem Meer zu einer Aufnahmeeinrichtung an Land.

13. Verfahren nach Anspruch 11 oder Anspruch 12, wobei Schritt b), Schritt c) oder Schritt f) das Erhitzen des Silagetanks (11), des Heiztanks (25) bzw. des Verdampfungstanks (31) durch Übertragen von Wärmeenergie von einem Motorkühlsystem des Hauptmotors (101) des Fischereischiffs (100) zu einer Heizanordnung (20) umfasst, die zum Erhitzen des Silagetanks (11), des Heiztanks (25) bzw. des Verdampfungstanks (31) konfiguriert ist.

14. Verfahren nach Anspruch 11, 12 oder 13, wobei Schritt b), Schritt c) oder Schritt f) das Erhitzen des Silagetanks (11), des Heiztanks (25) bzw. des Verdampfungstanks (31) durch Überführen einer warmen Flüssigkeit in einen Hohlraum (24) zwischen einem außerhalb des Tanks angeordneten Wärmemantel (22) oder einer Hülle und der Außenfläche des Tanks umfasst.

15. Fischereischiff (100) mit einer Fischereiausrüstung, einer Fischverarbeitungsausrüstung (119) und einer Fischlagerungsanordnung zur Lagerung von verarbeitetem Fisch, einer Hauptmaschine (101) zum Antrieb des Fischereischiffs und einer Silageanlage (10), die so konfiguriert ist, dass sie Meeresfutter aufnimmt und es zu einem Fischproteinkonzentrat-Silageprodukt verarbeitet, wobei die Silageanlage (10) einen Verdampfungstank (31) mit einem Rührwerk (17) und einer Heizanordnung (20) umfasst, wobei der Verdampfungstank so konfiguriert ist, dass er ein Silageprodukt aufnimmt, und wobei der Verdampfungstank (31) so konfiguriert ist, dass er Wasser aus dem Silageprodukt entfernt, da er mit einer Vakuumeinheit (33) verbunden ist, und dass er ein Fischproteinkonzentrat-Silageprodukt erzeugt, das weniger Wasser als die abgetrennte Silage umfasst, wobei die Heizanordnung (20) umfasst
- einen Mantel (22), der außerhalb wenigstens eines Teils des Verdampfungsbehälters (31) angeordnet ist und einen Hohlraum zwischen dem Mantel und einer Außenfläche des Verdampfungsbehälters (31) definiert;
- eine Wärmequelle (26), die so konfiguriert ist, dass sie Energie in den Hohlraum (24) überträgt, wodurch die Wand des Verdampfungsbehälters (31) erwärmt wird;
- wobei die Wärmequelle in Form einer beheizten Flüssigkeit oder elektrischer Heizkabel ausgebildet ist.

## Revendications

1. Navire de pêche (100) comprenant un équipement de pêche, un équipement de traitement de poisson (119), et un agencement de stockage de poisson pour un stockage du poisson traité, un moteur principal (101) pour la propulsion du navire de pêche, et une installation d'ensilage (10) configurée pour recevoir une charge marine et pour la transformer en un produit d'ensilage concentré en protéines de poisson, l'installation d'ensilage (10) comprenant
une conduite d'entrée de charge marine (12) ;
un réservoir d'ensilage (11) relié à la ligne d'entrée de charge marine (12) et comprenant un agitateur de réservoir d'ensilage (17) et un agencement de chauffage (20), le réservoir d'ensilage (11) étant configuré pour produire un ensilage autolysé de charge marine ;
un agencement d'alimentation en acide (15) configuré pour fournir un acide à la charge marine dans le réservoir d'ensilage (11) ;
un décanteur (27) configuré pour recevoir l'ensilage et pour le séparer en huile et en un ensilage séparé, dans lequel le décanteur comprend une sortie d'huile (27f) et une sortie d'ensilage séparée (27e) ;
un réservoir d'évaporation (31) comprenant un agitateur (17) et un agencement de chauffage (20), le réservoir d'évaporation étant configuré pour recevoir l'ensilage séparé, et dans lequel le réservoir d'évaporation (31) est configuré pour éliminer l'eau à partir de l'ensilage séparé reçu, lorsqu'il est relié à une unité de vide (33), et pour produire un produit d'ensilage concentré en protéines de poisson qui comprend moins d'eau que l'ensilage séparé ;
et dans lequel le navire (100) comprend un réservoir de stockage (35) configuré pour recevoir le produit d'ensilage concentré en protéines de poisson.

2. Navire de pêche (100) selon la revendication 1, **caractérisé en ce que** l'installation d'ensilage (10) comprend en outre un réservoir de chauffage (25) comprenant un agitateur et un agencement de chauffage (20), le réservoir de chauffage étant configuré pour recevoir l'ensilage autolysé et pour produire un ensilage chauffé de l'ensilage autolysé.

3. Navire de pêche (100) selon la revendication 1 ou la revendication 2, **caractérisé en ce que** l'agencement de chauffage (20) du réservoir de chauffage (25) et/ou du réservoir d'évaporation (31) sont agencés uniquement sur le côté externe du réservoir de chauffage (25) et/ou du réservoir d'évaporation (31), respectivement.

4. Navire de pêche (100) selon l'une quelconque des revendications précédentes, **caractérisé en ce que** l'installation d'ensilage (10) comprend un séparateur d'os (21) agencé en aval du réservoir d'ensilage (11) et en amont du réservoir de chauffage (25), et **en ce que** le décanteur (27) est un Tricanter, car il comprend une sortie d'os de Tricanter (27d), une sortie d'ensilage séparée (27e) et une sortie d'huile de Tricanter (27f).

5. Navire de pêche (100) selon l'une quelconque des revendications précédentes, **caractérisé en ce que** l'installation d'ensilage (10) comprend en outre un réservoir d'huile (29) qui est agencé en aval du décanteur (27).

6. Navire de pêche (100) selon l'une quelconque des revendications précédentes, **caractérisé en ce qu'**au moins l'un du réservoir de chauffage (25) et du réservoir d'évaporation (31) est pourvu d'un agencement de purge de gaz inerte (37) relié à une partie supérieure du réservoir.

7. Navire de pêche (100) selon l'une quelconque des revendications précédentes, **caractérisé en ce que** l'installation d'ensilage (10) comprend en outre une ligne de retour (19) qui s'étend depuis l'aval du réservoir d'ensilage (11) vers la ligne d'entrée de charge marine (12) ou un moulin (13) qui est agencé en association avec ce réservoir d'ensilage (11).

8. Navire de pêche (100) selon l'une quelconque des revendications précédentes, **caractérisé en ce que** le volume intérieur du réservoir de chauffage (25) est au moins aussi grand que le volume intérieur du réservoir d'ensilage (11).

9. Navire de pêche (100) selon l'une quelconque des revendications précédentes, **caractérisé en ce que** le réservoir de chauffage (25) et le réservoir d'évaporation (31) sont agencés de manière adjacente l'un à l'autre et à l'intérieur d'une chemise d'isolation commune (28).

10. Navire de pêche (100) selon l'une quelconque des revendications précédentes, **caractérisé en ce qu'**au moins un réservoir d'ensilage (11), et l'un du réservoir de chauffage (25) et du réservoir d'évaporation (31), sont intégrés à la coque du navire de pêche (100).

11. Procédé de production d'un produit d'ensilage concentré en protéines de poisson avec une installation d'ensilage (10) installée sur un navire de pêche (100) ayant un équipement de pêche installé de manière permanente, un équipement de traitement de poisson, et un agencement de stockage de poisson pour un stockage de poisson traité, comprenant les étapes suivantes consistant à :
a) recevoir une charge marine dans un réservoir d'ensilage (11) ;
b) ajouter de l'acide au réservoir d'ensilage (11) et chauffer l'intérieur du réservoir d'ensilage pour ainsi effectuer un processus d'autolyse de charge marine, en produisant ainsi un ensilage autolysé ;
c) après l'étape b), transférer l'ensilage autolysé du réservoir d'ensilage (11) vers un réservoir de chauffage (25), et chauffer l'ensilage autolysé à une température supérieure à la température dans le réservoir d'ensilage, en produisant ainsi un ensilage chauffé ;
d) après l'étape c), transférer l'ensilage chauffé vers un décanteur (27) et séparer l'ensilage chauffé en huile marine et un ensilage séparé ;
e) transférer l'huile séparée à l'étape d) dans un réservoir d'huile (29) ;
f) transférer l'ensilage séparé dans un réservoir d'évaporation (31), et éliminer l'eau à partir de l'ensilage séparé dans le réservoir d'évaporation (31), en produisant ainsi le produit d'ensilage concentré en protéines de poisson ;
g) après l'étape f), transférer le produit d'ensilage concentré en protéines de poisson vers un réservoir de stockage (35) sur le navire de pêche (100).

12. Procédé selon la revendication 11, comprenant en outre l'étape suivante :
h) après l'étape g), transférer le produit d'ensilage concentré marin vers une installation de réception à terre.

13. Procédé selon la revendication 11 ou la revendication 12, dans lequel l'étape b), l'étape c) ou l'étape f) comprend un chauffage du réservoir d'ensilage (11), du réservoir de chauffage (25) ou du réservoir d'évaporation (31), respectivement, en transférant de l'énergie thermique provenant d'un système de refroidissement de moteur du moteur principal (101) du navire de pêche (100) vers un agencement de chauffage (20) qui est configuré pour chauffer le réservoir d'ensilage (11), le réservoir de chauffage (25) ou le réservoir d'évaporation (31), respectivement.

14. Procédé selon la revendication 11, 12 ou 13, dans lequel l'étape b), l'étape c) ou l'étape f) comprend un chauffage du réservoir d'ensilage (11), du réservoir de chauffage (25) ou du réservoir d'évaporation (31), respectivement, en transférant un liquide chaud dans un vide (24) entre une chemise chauffante (22) ou un manteau agencé(e) à l'extérieur du réservoir, et la surface externe du réservoir.

15. Navire de pêche (100) comprenant un équipement de pêche, un équipement de traitement de poisson (119), et un agencement de stockage de poisson pour un stockage du poisson traité, un moteur principal (101) pour la propulsion du navire de pêche, et une installation d'ensilage (10) configurée pour recevoir une charge marine et pour la transformer en un produit d'ensilage concentré en protéines de poisson, dans lequel l'installation d'ensilage (10) comprend un réservoir d'évaporation (31) comprenant un agitateur (17) et un agencement de chauffage (20), le réservoir d'évaporation étant configuré pour recevoir un produit d'ensilage, et dans lequel le réservoir d'évaporation (31) est configuré pour éliminer de l'eau à partir du produit d'ensilage, lorsqu'il est relié à une unité de vide (33), et pour produire un produit d'ensilage concentré en protéines de poisson qui comprend moins d'eau que l'ensilage séparé, l'agencement de chauffage (20) comprenant
une chemise (22) agencée à l'extérieur d'au moins une partie du réservoir d'évaporation (31) et définissant un vide entre la chemise et une surface extérieure du réservoir d'évaporation (31) ;
une source de chaleur (26) configurée pour transférer de l'énergie dans le vide (24), en chauffant ainsi la paroi du réservoir d'évaporation (31) ;
dans lequel la source de chaleur se présente sous la forme d'un fluide chauffé ou de câbles de résistance électrique.
